# EUROPÄISCHE PATENTSCHRIFT

(11) **EP 2 225 323 B1**
(45) Veröffentlichungstag und Bekanntmachung des Hinweises auf die Patenterteilung: **08.03.2017**
(21) Anmeldenummer: 08861687.5
(22) Anmeldetag: 31.10.2008
(51) Int. Cl.: C08L 21/00, C08L 15/00, C08K 3/00, B60C 1/00

(54) **KAUTSCHUKMISCHUNG, INSBESONDERE FÜR FAHRZEUGREIFEN**
RUBBER MIXTURE, PARTICULARLY FOR VEHICLE TIRES
MÉLANGE DE CAOUTCHOUC, EN PARTICULIER POUR PNEUMATIQUES DE VÉHICULES

(30) Priorität: 18.12.2007 DE 102007060859
(43) Veröffentlichungstag der Anmeldung: 08.09.2010
(73) Patentinhaber: Continental Reifen Deutschland GmbH, 30165 Hannover (DE)
(72) Erfinder: WEBER, Christian, 30826 Garbsen (DE); RECKER, Carla, 30167 Hannover (DE); HERZOG, Katharina, 31177 Harsum (DE); LASCHET, Marc, 30163 Hannover (DE)
(74) Vertreter: Finger, Karsten
(86) Internationale Anmeldenummer: PCT/EP2008/064773
(87) Internationale Veröffentlichungsnummer: WO 2009/077256

(56) Entgegenhaltungen:
- EP-A- 0 794 224
- EP-A- 0 849 313
- EP-A- 1 270 657
- EP-A1- 1 679 342
- WO-A-2009/007167
- US-A- 4 822 844

## Beschreibung

Die Erfindung betrifft eine Kautschukmischung, insbesondere für Fahrzeugreifen.

Da die Fahreigenschaften eines Reifens, insbesondere Fahrzeugreifens, in einem großen Umfang von der Kautschukzusammensetzung des Laufstreifens abhängig sind, werden besonders hohe Anforderungen an die Zusammensetzung der Laufstreifenmischung gestellt. So wurden vielfältige Versuche unternommen, die Eigenschaften des Reifens durch die Variation der Polymerkomponenten, der Füllstoffe und der sonstigen Zuschlagstoffe in der Laufstreifenmischung positiv zu beeinflussen. Prinzipiell handelt es sich bei den gewünschten Eigenschaften um Abrieb, Rollwiderstand, gemessen durch die Rückprallelastizität, und Nassgriff. Dabei muss man berücksichtigen, dass eine Verbesserung in der einen Reifeneigenschaft oft eine Verschlechterung einer anderen Eigenschaft mit sich bringt. In einem gegebenen Mischungssystem existieren zum Beispiel verschiedene, bekannte Möglichkeiten die Abriebsfestigkeit heraufzusetzen. Zu erwähnen sind hier die Senkung der Glasübergangstemperatur der Kautschukmischung, die Optimierung des Füllgrades und der Wechsel des Polymersystems. Alle genannten Maßnahmen führen dabei zwangsläufig zu einer Verschlechterung der Nassgriffeigenschaften der gegebenen Mischung.

Insbesondere die Beeinflussung der Glasübergangstemperatur durch Modifizierung der verwendeten Kautschuke und die Wahl geeigneter Polymerkomponenten wird in der Fachwelt vielfach diskutiert. Um Reifeneigenschaften wie Abrieb, Nassrutschverhalten und Rollwiderstand zu beeinflussen, ist es z. B. bekannt, Kautschuke mit unterschiedlichen Modifizierungen für die Kautschukmischungen zu verwenden.

Der diesbezügliche Stand der Technik soll nun näher vorgestellt werden.

Die in dieser Schrift verwendete Angabe phr (parts per hundred parts of rubber by weight) ist dabei die in der Kautschukindustrie übliche Mengenangabe für Mischungsrezepturen. Die Dosierung der Gewichtsteile der einzelnen Substanzen wird dabei stets auf 100 Gewichtsteile der gesamten Masse aller in der Mischung vorhandenen Kautschuke bezogen.

Zum Stand der Technik sind folgende Druckschriften zu würdigen:
(D1) EP 0 102 045 B2
(D2) JP 2005220323 A
(D3) DE 698 23 479 T2
(D4) DE 698 02 245 T2
(D5) DE 601 19 370 T2
(D6) EP 0 794 224 A1
(D7) EP 1 270 657 A1

D1 offenbart eine Dienkautschukmischung, welche als Hauptkomponente ein lösungspolymerisiertes Styrolbutadiencopolymer mit einer Glastemperatur von nicht weniger als -50°C hat. Nicht weniger als 40 Gew. -% bis weniger als 65 Gew. -% der Polymerketten des lösungspolymerisierten Styrolbutadiencopolymers sind hierbei mit Siliziumtetrachlorid modifiziert und die Styrolbutadiencopolymere haben 40 Gew. -% oder weniger Vinylbindungen in dem Butadien.

Aus D2 ist eine Kautschukmischung bekannt, die eine Verbesserung hinsichtlich des Abriebs, der Griffigkeit auf der Fahrbahn und es Treibstoffverbrauchs zeigt. Die Kautschukmischung enthält hierbei ein konjugiertes Dienpolymer A und ein konjugiertes Dienpolymer B, dessen Glasübergangstemperatur 20 - 80°C niedriger als die des Polymers A ist und einen anorganischen Füllstoff. Bei Polymer B handelt es sich um ein modifiziertes Butadienpolymer oder ein Stryol-Butadien-Copolymer mit 10 - 40 Gew. -% Vinyl-Anteil.

Eine Kautschukmischung mit zwei verschiedenen Copolymeren wird in D3 offenbart. Das erste Copolymer ist modifiziert bzw. funktionalisiert, hat eine Glasumwandlungstemperatur zwischen 0 und -80°C und einen Vinyl-Anteil zwischen 5 und 50 Gew. -%, während das zweite Copolymer nicht modifiziert ist und eine Glasumwandlungstemperatur zwischen 0 und -80°C und einen Vinyl-Anteil zwischen 5 und 50 Gew. -% besitzt. Des Weiteren enthält die Kautschukmischung noch zwei Verstärkerfüllstoffe, u.a. zwischen 50 und 100 phr eines Füllstoffes aus Kieselerdebasis.

In D4 wird ein Luftreifen mit einer schwefel-vulkanisierbaren Zusammensetzung beschrieben, die gekennzeichnet ist durch 50 bis 90 phr eines Kautschuks mit einer Glasübergangstemperatur im Bereich von -80°C bis -110°C und 10 bis 50 phr mindestens eines Kautschuks mit einer Glasübergangstemperatur im Bereicht von -79°C bis +20°C und 15 bis 50 phr eines Harzes, das kein Kautschuk ist. Diese Mischung zeigt verbesserte Laboreigenschaften, welche mit einer verbesserten Reifenabnutzung bei gleichzeitiger Verbesserung der Griffigkeit und des Fahrverhaltens korrelieren.

D5 beschreibt eine elastomere, schwefelvulkanisierbare Zusammensetzung für die Herstellung von Reifen zur Reduzierung der Hysterese und somit zur Verringerung des Treibstoffverbrauchs. Diese Mischung umfasst einen Blend aus 20 bis 100 Gew.-% eines funktionalisierten Elastomers mit 10 bis 150 phr Siliziumdioxid und mit 0 phr Ruß und 0 bis 80 Gew.-% eines nicht-funktionalisierten Elastomers.

**D6** beschreibt Kautschukzusammensetzungen für Reifen die einen mit N-Methyl-ε-caprolactam modifizierten Styrolbutadienkautschuk und einen hochmolekularen Styrolbutadienkautschuk enthalten.

**D7** beschreibt eine Kautschukmischung für Laufstreifen von Reifen die einen endgruppenmodifizierten Styrolbutadien Kautschuk, mindestens einen weiteren Kautschuk und eine relativ große Menge an Kieselsäure enthält.

Der vorliegenden Erfindung liegt nun die Aufgabe zu Grunde, Kautschukmischungen bereitzustellen, deren Vulkanisate sich durch einen erhöhten Nassgriff auszeichnen, wobei gleichzeitig der Rollwiderstand auf gleichem Niveau verbleibt oder sogar verbessert wird.

Gelöst wird die Aufgabe dadurch, dass die Kautschukmischung der eingangs genannten Art zumindest durch folgende Zusammensetzung gekennzeichnet ist:
- 20 - 90 phr zumindest eines natürlichen oder synthetischen Polyisoprens und
- 5 - 40 phr zumindest eines Butadienkautschuks und
- 5 - 50 phr zumindest eines endgruppenmodifizierten Styrolbutadienkautschuks und
- 0 - 50 phr zumindest eines weiteren polaren oder unpolaren Kautschuks und
- 0 - 7 phr zumindest eines Weichmacheröls und
- 0,1 - 20 phr amorphe Kieselsäure und / oder Fällungskieselsäure und
- 30 - 70 phr zumindest eines Rußes und
- 2 - 100 phr weitere Zusatzstoffe,
wobei der Styrolbutadienkautschuk eine Glasübergangstemperatur zwischen -40°C und 0°C hat und mit Aminogruppen und/oder Alkoxysilylgruppen und/oder OH-Gruppen und/oder Epoxidgruppen und/oder Carboxylgruppen und/oder Mercaptogruppen endgruppenmodifiziert ist.

Überraschenderweise wurde gefunden, dass durch obig beschriebene Kautschukmischung der Nassgriff sich verbessert und der Rollwiderstand auf dem gleichen Niveau verbleibt oder sich sogar verbessert. Dadurch ist es möglich den entsprechenden Zielkonflikt zwischen Nassgriff und Rollwiderstand zu entkoppeln. Dies gilt nicht nur für den Fahrzeuglaufstreifen, sondern auch für weitere innere Reifenbauteile. Die Kautschukmischungen für die weiteren inneren Reifenbauteile werden im Folgenden zusammengefasst, und wie in der Reifentechnologie üblich, auch als body compounds oder body-Mischungen bezeichnet.

Weitere Anwendung findet die erfindungsgemäße Kautschukmischung in der Mischungsentwicklung für Riemen und Gurte, insbesondere für Fördergurte.

Im täglichen Einsatz, vor allem bei Betrieb im Außenbereich, unterliegt insbesondere die Laufseite von Fördergurten starken mechanischen Beanspruchungen, z. B. bei Umlenkung an Antriebs-, Umlenk- und / oder Knicktrommeln und Aushalten der auftretenden Zugkräfte. Daher sind die Griffigkeit auch bei nassen oder feuchten Witterungsverhältnissen sowie die Rückprallelastizität, bei gleich bleibenden weiteren viskoelastischen Eigenschaften, zur Sicherung einer langen Lebensdauer und zur Arbeitssicherheit von großer Bedeutung.

Die Kautschukmischung enthält 20 - 90 phr, bevorzugt 25 - 80 phr, besonders bevorzugt 45 - 80 phr zumindest eines natürlichen oder synthetischen Polyisoprens.

Des Weiteren sind in der Kautschukmischung 5 - 40 phr, bevorzugt 5 - 30 phr zumindest eines Butadienkautschuks enthalten. In einer besonderen Ausführungsform ist der Butadienkautschuk ein high-cis Butadienkautschuk mit einem cis-Anteil größer oder gleich 90 Gew. -%.

Zumindest ein endgruppenmodifizierter Styrolbutadienkautschuk ist in Mengenanteilen von 5 - 50 phr, bevorzugt in Mengenanteilen von 10 - 40 phr in der Kautschukmischung vorhanden. Es handelt sich hierbei bevorzugt um einen lösungspolymerisierten Styrolbutadienkautschuk oder um einen emulsionspolymerisierten Styrolbutadienkautschuk. Der Styrolbutadienkautschuk hat eine Glasübergangstemperatur zwischen -40°C und 0°C, bevorzugt zwischen -35°C und 0°C und besonders bevorzugt zwischen -30°C und -10°C.

Der Styrolgehalt des Styrolbutadienkautschuks ist bevorzugt kleiner oder gleich 50 Gew. - % und / oder der Vinylgehalt des Styrolbutadienkautschuks ist bevorzugt größer oder gleich 10 Gew. -%.

Der Styrolbutadienkautschuk ist mit Aminogruppen und / oder Alkoxysilylgruppen und / oder OH-Gruppen und / oder Epoxidgruppen und / oder Carboxylgruppen und / oder Mercaptogruppen endgruppenmodifiziert.

In der Kautschukmischung sind 0 - 50 phr, bevorzugt wenigstens 0,1 phr, insbesondere wenigstens 0,5 phr, zumindest eines weiteren polaren und / oder unpolaren Kautschuks enthalten. Der weitere polare und / oder unpolare Kautschuk ist hierbei ausgewählt aus der Gruppe bestehend aus Flüssigkautschuken und / oder Halobutylkautschuk und / oder Polynorbornen und / oder Isopren-Isobutylen-Copolymer und / oder Ethylen-Propylen-Dien-Kautschuk und / oder Nitrilkautschuk und / oder Chloroprenkautschuk und / oder Acrylat-Kautschuk und / oder Fluorkautschuk und / oder Silikon-Kautschuk und / oder Polysulfidkautschuk und / oder Epichlorhydrinkautschuk und / oder Styrol-Isopren-Butadien-Terpolymer. Zusätzlich kann die Kautschukmischung auch noch weitere Dienkautschuke enthalten, die nicht den kennzeichnenden Merkmalen der Ansprüche 1 bis 13 entsprechen.

Die erfindungsgemäße Kautschukmischung enthält weiterhin 0 - 7 phr, bevorzugt wenigstens aber 0,1 phr, insbesondere wenigstens 0,5 phr, zumindest eines Weichmacheröls, wobei das Weichmacheröl bevorzugt ein Mineralöl ist, das ausgewählt ist aus der Gruppe, bestehend aus DAE (Destillated Aromatic Extracts) und / oder RAE (Residual Aromatic Extract) und / oder TDAE (Treated Destillated Aromatic Extracts) und / oder MES (Mild Extracted Solvents) und / oder naphtenische Öle.

Es können in der Kautschukmischung noch 0 - 5 phr zumindest eines weiteren zusätzlichen Weichmachers vorhanden sein. Dieser weitere Weichmacher kann ein synthetischer Weichmacher und / oder eine Fettsäure und / oder ein Fettsäurederivat und / oder ein Harz und / oder ein Faktis sein.

Die Kautschukmischung enthält 0,1 - 20 phr, bevorzugt wenigstens 0,5 phr, amorphe Kieselsäure und / oder Fällungskieselsäure. Es können dabei alle dem Fachmann für die Reifenindustrie bekannten Kieselsäuren eingesetzt werden. Die amorphe Kieselsäure und / oder Fällungskieselsäure ist durch ein Kupplungsagenz, bevorzugt zumindest ein Silan, and die Polymermatrix angebunden.

Das Silan wird in Mengenanteilen von 0 - 10 phr, bevorzugt in Mengenanteilen von 0 - 8 phr, besonders bevorzugt wenigstens aber 0,1 phr, insbesondere wenigstens 0,5 phr, eingesetzt. Die Silan-Kupplungsagenzien dienen gleichzeitig zur Verbesserung der Verarbeitbarkeit und zur Anbindung der Kieselsäure und anderer ggf. vorhandener polarer Füllstoffe an den Dienkautschuk und reagieren mit den oberflächlichen Silanolgruppen der Kieselsäure oder anderen polaren Gruppen während des Mischens des Kautschuks bzw. der Kautschukmischung (in situ) oder bereits vor der Zugabe des Füllstoffes zum Kautschuk im Sinne einer Vorbehandlung (Vormodifizierung). Als Silan-Kupplungsagenzien können dabei alle dem Fachmann für die Verwendung in Kautschukmischungen bekannten Silan-Kupplungsagenzien verwendet werden.

Des Weiteren enthält die Kautschukmischung 30 - 70 phr zumindest eines Rußes, bevorzugt mit einer DPB-Zahl zwischen 105 und 150 cm³ / 100g. Die DBP-Zahl gemäß ASTM D 2414 bestimmt das spezifische Absorptionsvolumen eines Rußes oder eines hellen Füllstoffes mittels Dibutyl-phthalat.

Die Kautschukmischung kann neben Kieselsäure und / oder Ruß auch noch weitere Füllstoffe wie Aluminiumhydroxid, Schichtsilikate, Kreide, Stärke, Magnesiumoxid, Titandioxid, Kautschukgele, Kurzfasern usw. in beliebigen Kombinationen enthalten.

Des Weiteren enthält die Kautschukmischung noch weitere Zusatzstoffe.
Weitere Zusatzstoffe beinhaltet im Wesentlichen das Vernetzungssystem (Vernetzer, Beschleuniger und Verzögerer), Ozonschutzmittel, Alterungsschutzmittel, Mastikationshilfsmittel und Aktivatoren.
Der Mengenanteil der Gesamtmenge an weiteren Zusatzstoffen beträgt 2 bis 100 phr, bevorzugt 3 bis 80 phr und besonders bevorzugt 5 - 60 phr.

Die Vulkanisation der Kautschukmischung wird in Anwesenheit von Schwefel oder Schwefelspendern durchgeführt, wobei einige Schwefelspender zugleich als Vulkanisationsbeschleuniger wirken können. Schwefel oder Schwefelspender werden im letzten Mischungsschritt in den vom Fachmann gebräuchlichen Mengen (0,4 bis 4 phr, Schwefel, bevorzugt in Mengen von 1,0 bis 2,5 phr) der Kautschukmischung zugesetzt. Zur Kontrolle der erforderlichen Zeit und / oder Temperatur der Vulkanisation und zur Verbesserung der Vulkanisateigenschaften kann die Kautschukmischung vulkanisationsbeeinflussende Substanzen wie Vulkanisationsbeschleuniger, Vulkanisationsverzögerer und Vulkanisationsaktivatoren in den üblichen Mengen enthalten, die erfindungsgemäß in den obig beschriebenen Zusatzstoffen enthaltend sind.

Die Herstellung der erfindungsgemäßen Kautschukmischung erfolgt nach dem in der Kautschukindustrie üblichen Verfahren, bei dem zunächst in ein oder mehreren Mischstufen eine Grundmischung mit allen Bestandteilen außer dem Vulkanisationssystem (Schwefel und vulkanisationsbeeinflussende Substanzen) hergestellt wird. Durch Zugabe des Vulkanisationssystems in einer letzten Mischstufe wird die Fertigmischung erzeugt. Die Fertigmischung wird z.B. durch einen Extrusionsvorgang weiterverarbeitet und in die entsprechende Form gebracht.

Die Kautschukmischung wird zur Herstellung von Fahrzeugluftreifen, insbesondere eines Laufstreifens und / oder einer Body-Mischung verwendet. Als Body-Mischungen werden hier die Mischungen bezeichnet, aus denen die inneren Bauteile eines Fahrzeugreifens bestehen.

Zur Verwendung in Fahrzeugluftreifen wird die Mischung bevorzugt in die Form eines Laufstreifens gebracht und bei der Herstellung des Fahrzeugreifenrohlings wie bekannt aufgebracht. Der Laufstreifen kann aber auch in Form eines schmalen Kautschukmischungsstreifens auf einen Reifenrohling aufgewickelt werden. Die Herstellung der erfindungsgemäßen Kautschukmischung zur Verwendung als Body-Mischung in Fahrzeugreifen erfolgt wie bereits für den Laufstreifen beschrieben. Der Unterschied liegt in der Formgebung nach dem Extrusionsvorgang. Die so erhaltenen Formen der erfindungsgemäßen Kautschukmischung für eine oder mehrere unterschiedliche Body-Mischungen dienen dann dem Aufbau eines Reifenrohlings.

Die Kautschukmischung wird zur Herstellung von Riemen und Gurten, insbesondere Fördergurten, Flachriemen, Keilriemen, Keilrippenriemen und Zahnriemen verwendet. Zur Verwendung der erfindungsgemäßen Kautschukmischung in Riemen und Gurten wird die extrudierte Mischung in die entsprechende Form gebracht und dabei oder nachher häufig mit Festigkeitsträgern, z.B. synthetische Fasern oder Stahlcorde, versehen. Zumeist ergibt sich so ein mehrlagiger Aufbau, bestehend aus einer und / oder mehrerer Lagen Kautschukmischung, einer und / oder mehrerer Lagen gleicher und / oder verschiedener Festigkeitsträger und einer und / oder mehreren weiteren Lagen dergleichen und / oder einer anderen Kautschukmischung.

Die Erfindung soll nun anhand von Vergleichs- und Ausführungsbeispielen, die in Tabellen 1a und 1b zusammengefasst sind, näher erläutert werden.

Bei sämtlichen in der Tabelle enthaltenen Mischungsbeispielen sind die angegebenen Mengenangaben Gewichtsteile, die auf 100 Gewichtsteile Gesamtkautschuk bezogen sind (phr).

Die Mischungsherstellung erfolgte unter üblichen Bedingungen in zwei Stufen in einem Labortangentialmischer. Aus sämtlichen Mischungen wurden Prüfkörper durch Vulkanisation hergestellt und mit diesen Prüfkörpern für die Kautschukindustrie typische Materialeigenschaften bestimmt. Für die obig beschriebenen Tests an Prüfkörpern wurden folgende Testverfahren angewandt:
- Shore-A-Härte bei Raumtemperatur (RT) gemäß DIN 53 505
- Rückprallelastizität bei Raumtemperatur (RT) und 70°C gemäß DIN 53 512
- Spannungswerte bei 300 % Dehnung bei Raumtemperatur gemäß DIN 53 504

Bei sämtlichen in der Tabelle enthaltenen Mischungsbeispielen sind die angegebenen Mengenangaben, wie bereits beschrieben, Gewichtsteile, die auf 100 Gewichtsteile Gesamtkautschuk bezogen sind (phr). Die Vergleichsmischungen sind mit V1 bis V4 für verschiedene Referenzmischungen ohne das erfindungsgemäße Polymersystem bzw. E für eine Mischung mit Verwendung des erfindungsgemäßen Polymersystems gekennzeichnet. Tabelle 1a zeigt die jeweiligen Mischungszusammensetzungen und Tabelle 1b die entsprechenden Prüfergebnisse.

**Tabelle 1a**

| **Bestandteile** | **Einheit** | **V1** | **V2** | **V3** | **V4** | **E** |
|---|---|---|---|---|---|---|
| Polyisopren | phr | 100 | 85 | 50 | 50 | 50 |
| BR^{a} | phr | -- | 15 | 15 | 15 | 15 |
| SSBR^{b} | phr | -- | -- | 35 | 35 | 35 |
| Styrolanteil des SSBR | Gew. -% | -- | -- | 15 | 25 | 21 |
| Vinylanteil des SSBR | Gew. -% | -- | -- | 29 | 30 | 61 |
| Glasübergangstemperatur des SSBR | °C | -- | -- | -55 | -53 | -27 |
| Endgruppenfunktionalisierung des SSBR^{c} | -- | -- | -- | Ja | Nein | Ja |
| Ruß N-121 | phr | 46 | 46 | 46 | 46 | 46 |
| Silika | phr | 5 | 5 | 5 | 5 | 5 |
| Weichmacheröl^{d} | phr | 1 | 1 | 1 | 1 | 1 |
| Vulkanisationssystem^{e} | phr | 2,7 | 2,7 | 2,7 | 2,7 | 2,7 |

| | | | | | | |
|---|---|---|---|---|---|---|
| ^{a} High-cis Polybutadien , cis-Anteil ≥ 95 Gew. -% ^{b} SSBR Styrolbutadienkautschuk ^{c} durch Aminosilanfunktionalisierung endgruppenmodifiziert ^{d} Mineralöl, TDAE ^{e} Vulkanisationssystem enthält: Schwefel, Beschleuniger (CBS), Verzögerer (CTP) | | | | | | |

**Tabelle 1b**

| **Eigenschaften** | **Einheit** | **V1** | **V2** | **V3** | **V4** | **E** |
|---|---|---|---|---|---|---|
| Härte bei RT | Shore A | 63,0 | 63,5 | 62,9 | 64,3 | 63,2 |
| Rückprall RT | % | 48,7 | 50,3 | 51,7 | 42,1 | 44,2 |
| Rückprall 70°C | % | 62,1 | 61,8 | 61,3 | 52,7 | 60,1 |
| Spannungswert 300% | MPa | 13,8 | 13,4 | 13,1 | 12,7 | 14 |

Der Nassgriff der Kautschukmischung wird im Labormaßstab durch die Rückprallelastizität bei Raumtemperatur und der Rollwiderstand durch die Rückprallelastizität bei 70°C ausgedrückt. Diese beiden Indikatoren bilden den Zielkonflikt, der durch die erfindungsgemäße Kautschukmischung E gelöst oder zumindest entschärft werden soll.

Mischung V1 enthält als Polymerkomponente nur Polyisopren. Durch den anteiligen Austausch von Polyisopren durch Butadienkautschuk, wie durch V2 dargestellt, verschlechtert sich der Nassgriff, dadurch dass der Wert für die Rückprallelastizität bei RT vergleichsweise größer wird, ohne dass sich der Rollwiderstand verschlechtert. Wird weiterhin anteilig Polyisopren durch einen endgruppenmodifizierten Styrolbutadienkautschuk mit einer niedrigen Glasübergangstemperatur, siehe V3, ausgetauscht, so zeigt sich keine Verbesserung des Nassgriffs. Bei anteiligem Austausch durch einen nicht endgruppenmodifizierten Styrolbutadienkautschuk mit einer niedrigen Glasübergangstemperatur, siehe V4, bringt zwar die gewünschte Verbesserung des Nassgriffs, gleichzeitig aber eine nicht akzeptable Verschlechterung des Rollwiderstandes, dadurch das der Wert für die Rückprallelastizität niedriger wird, mit sich.

Erst durch die erfindungsgemäße Kautschukmischung, siehe E, wird dieser Zielkonflikt entschärft. In diesem Ausführungsbeispiel wird ein endgruppenmodifizierter Styrolbutadienkautschuk mit einer vergleichsweise hohen Glasübergangstemperatur eingesetzt.

## Patentansprüche

1. Kautschukmischung **gekennzeichnet durch** folgende Zusammensetzung:
- 20 - 90 phr zumindest eines natürlichen oder synthetischen Polyisoprens und
- 5 - 40 phr zumindest eines Butadienkautschuks und
- 5 - 50 phr zumindest eines endgruppenmodifizierten Styrolbutadienkautschuks und
- 0 - 50 phr zumindest eines weiteren polaren oder unpolaren Kautschuks und
- 0 - 7 phr zumindest eines Weichmacheröls und
- 0,1 - 20 phr amorphe Kieselsäure und / oder Fällungskieselsäure und
- 30 - 70 phr zumindest eines Rußes und
- 2 - 100 phr weitere Zusatzstoffe,
wobei der Styrolbutadienkautschuk eine Glasübergangstemperatur zwischen -40°C und 0°C hat und mit Aminogruppen und / oder Alkoxysilylgruppen und / oder OH-Gruppen und / oder Epoxidgruppen und / oder Carboxylgruppen und / oder Mercaptogruppen endgruppenmodifiziert ist.

2. Kautschukmischung nach Anspruch 1, **dadurch gekennzeichnet, dass** sie 25 - 80 phr eines natürlichen oder synthetischen Polyisoprens enthält.

3. Kautschukmischung nach einem der Ansprüche 1 bis 2, **dadurch gekennzeichnet, dass** sie 5 - 30 phr eines Butadienkautschuks enthält.

4. Kautschukmischung nach einem der Ansprüche 1 bis 3, **dadurch gekennzeichnet, dass** sie 10 - 40 phr eines Styrolbutadienkautschuks enthält.

5. Kautschukmischung nach Anspruch 1 oder 4, **dadurch gekennzeichnet, dass** der Styrolbutadienkautschuk einen Styrolgehalt kleiner oder gleich 50 Gew.-% und / oder einen Vinylgehalt größer oder gleich 10 Gew.-% hat.

6. Kautschukmischung nach einem der Ansprüche 1 bis 5, **dadurch gekennzeichnet, dass** der Ruß eine DBP-Zahl zwischen 105 und 150 cm³ / 100g hat.

7. Verwendung einer Kautschukmischung nach einem der Ansprüche 1 bis 6 zur Herstellung eines Reifens.

8. Verwendung einer Kautschukmischung nach Anspruch 7 zur Herstellung des Laufstreifens eines Reifens.

9. Verwendung einer Kautschukmischung nach Anspruch 7 zur Herstellung einer Body-Mischung eines Reifens.

10. Verwendung einer Kautschukmischung nach Anspruch 9 zur Herstellung einer Body-Mischung eines Reifens, beinhaltend Seitenwand, Innenseele, Apex, Gürtel, Schulter, Gürtelprofil, Squeege, Karkasse, Wulstverstärker und / oder Bandage.

11. Verwendung einer Kautschukmischung nach einem der Ansprüche 1 bis 6 zur Herstellung eines Gurtes oder Riemens.

## Claims

1. Rubber mixture **characterized by** the following composition:
- from 20 - 90 phr of at least one natural or synthetic polyisoprene and
- from 5 - 40 phr of at least one butadiene rubber and
- from 5 - 50 phr of at least one end-group-modified styrene-butadiene rubber and
- from 0 - 50 phr of at least one other polar or nonpolar rubber and
- from 0 - 7 phr of at least one plasticizer oil and
- from 0.1 - 20 phr of amorphous silica and/or precipitated silica and
- from 30 to 70 phr of at least one carbon black and
- from 2 to 100 phr of other additives,
where the glass transition temperature of the styrene-butadiene rubber is from -40°C to 0°C and the styrene-butadiene rubber has end-group modification by amino groups and/or by alkoxysilyl groups and/or by OH groups and/or by epoxy groups and/or by carboxy groups and/or by mercapto groups.

2. Rubber mixture according to Claim 1, **characterized in that** it comprises from 25 - 80 phr of a natural or synthetic polyisoprene.

3. Rubber mixture according to Claim 1 or 2, **characterized in that** it comprises from 5 - 30 phr of a butadiene rubber.

4. Rubber mixture according to Claim 1 or 3, **characterized in that** it comprises from 10-40 phr of a styrene-butadiene rubber.

5. Rubber mixture according to Claim 1 or 4, **characterized in that** the styrene content of the styrene-butadiene rubber is less than or equal to 50% by weight and/or the vinyl content of the styrene-butadiene rubber is greater than or equal to 10% by weight.

6. Rubber mixture according to any of Claims 1 to 5, **characterized in that** the DBP number of the carbon black is from 105 to 150 cm³/100 g.

7. Use of a rubber mixture according to any of Claims 1 to 6 for the production of a tyre.

8. Use of a rubber mixture according to Claim 7 for the production of the tread of a tyre.

9. Use of a rubber mixture according to Claim 7 for the production of a body mixture of a tyre.

10. Use of a rubber mixture according to Claim 9 for the production of a body mixture of a tyre, comprising side wall, inner lining, apex, belt, shoulder, belt profile, squeegee, carcass, bead reinforcement, and/or bandage.

11. Use of a rubber mixture according to any of Claims 1 to 6 for the production of a drive belt or other belt.

## Revendications

1. Mélange de caoutchoucs **caractérisé par** la composition suivants :
- 20 à 90 phr d'au moins un polyisoprène naturel ou synthétique,
- 5 à 40 phr d'au moins un caoutchouc butadiène,
- 5 à 50 phr d'au moins un caoutchouc styrène butadiène à groupes terminaux modifiés,
- 0 à 50 phr d'au moins un autre caoutchouc polaire ou apolaire,
- 0 à 7 phr d'au moins une huile plastifiante,
- 0,1 à 20 phr d'acide silicique amorphe et/ou d'acide silicique précipité,
- 30 à 70 phr d'au moins un noir de carbone, et
- 2 à 100 phr d'autres additifs,
où le caoutchouc styrène butadiène a une température de transition vitreuse entre -40°C et 0°C et est modifié au niveau de ses groupes terminaux par des groupes amino et/ou des groupes alcoxysilyles et/ou des groupes -OH et/ou des groupes époxydes et/ou des groupes carboxyles et/ou des groupes mercapto.

2. Mélange de caoutchoucs selon la revendication 1, **caractérisé en ce qu'**il contient 25 à 80 phr d'un polyisoprène naturel ou synthétique.

3. Mélange de caoutchoucs selon une des revendications 1 à 2, **caractérisé en ce qu'**il contient 5 à 30 phr d'un caoutchouc butadiène.

4. Mélange de caoutchoucs selon une des revendications 1 à 3, **caractérisé en ce qu'**il contient 10 à 40 phr d'un caoutchouc styrène butadiène.

5. Mélange de caoutchoucs selon la revendication 1 ou 4, **caractérisé en ce que** le caoutchouc styrène butadiène a une teneur en styrène inférieure ou égale à 50 % en poids et/ou une teneur en vinyle supérieure ou égale à 10 % en poids.

6. Mélange de caoutchoucs selon une des revendications 1 à 5, **caractérisé en ce que** le noir de carbone a un indice de DBP entre 105 et 150 cm³ / 100 g.

7. Utilisation d'un mélange de caoutchoucs selon une des revendications 1 à 6 pour fabriquer un pneu.

8. Utilisation d'un mélange de caoutchoucs selon la revendication 7 pour fabriquer la bande de roulement d'un pneu.

9. Utilisation d'un mélange de caoutchoucs selon la revendication 7 pour fabriquer un mélange d'éléments d'un pneu.

10. Utilisation d'un mélange de caoutchoucs selon la revendication 9 pour fabriquer un mélange d'éléments d'un pneu, comprenant flanc, chambre à air, renfort Apex, ceinture, bande de roulement, profil de ceinture, raclette, carcasse, renforts de talon et/ou bandage.

11. Utilisation d'un mélange de caoutchoucs selon une des revendications 1 à 6 pour fabriquer une ceinture ou sangle.
